# EUROPEAN PATENT APPLICATION

(11) **EP 1 796 383 A1**
(43) Date of publication of application: **13.06.2007**
(21) Application number: 05292697.9
(22) Date of filing: 12.12.2005
(51) Int. Cl.: H04N 5/64

(54) **TV set**

(71) Applicant: TCL Thomson Electronics Europe SAS, 49002 Angers Cedex 01 (FR)
(72) Inventor: L'Ebrellec, Jean-Pierre, TCL Thomson Electronics, 49002 Angers Cedex 01 (FR); Saulnier, Patrick, TCL Thomson Electronics, 49002 Angers Cedex 01 (FR); Oger, Laurent, TCL Thomson Electronics, 49002 Angers Cedex 01 (FR)

(57) **Abstract**

A TV set comprises a housing with a front cover and a back cover, a flat screen, components, such as an audio-video board, and supporting means for fixing the components. The back cover integrates the supporting means and the components are fixed to the back cover.

## Description

### Field of the invention

The present invention is related to a TV set according to the preamble of claim 1. Such a TV set is comprised of a flat screen, such as LCD panel, and components, such as an audio-video board.

### Technical background

A display apparatus without further components is described by the US 2002/0080297 A1. The display apparatus comprises a housing with a front cover and a back cover and a flat screen with a LCD panel element, a panel support, a PCB assembly and a PCB cover. When assembling the display apparatus, the LCD panel element is coupled to the panel support and both are coupled to the front cover. The PCB assembly is mounted to the rear of the panel support and the LCD panel element is covered by the PCB cover. A determined coupling between the front cover and the back cover enables a shortening of the assembly time and achieves a thinner and more compact design.

All of the flat screen elements are fixed to the front cover, which has the shape of a frame. As a result, the panel support and the PCB cover, which function as supporting means, need a certain stability and a certain extension.

TV sets, which are the scope of the invention, comprise further components, such as an audio-video assembly, and further supporting means other than the flat screen. The applicant knows a TV set with some further components, in particular feature components, such as an audio-video board, and accessory components, such as a DVD player. All of these components as well as the flat screen are fixed to the front cover by supporting means. These supporting elements are made out of metal for stabilisation reasons. They also require a certain extension. Two steps are necessary when assembling the TV set. Either components have to be coupled to its supporting means and both have to be fixed to the front cover or the supporting means have to be fixed to the front cover and the components have to be coupled to its supporting means.

### Summary of the invention

It is therefore desirable to develop a TV set comprising a housing with a front cover and a back cover, a flat screen, components and supporting means for fixing the components, which needs less effort to manufacture and assemble the TV set. The TV set should have a thin and compact design.

According to the invention this can be achieved by a TV set comprising a housing with a front cover and a back cover, a flat screen, components and supporting means for fixing the components, wherein the back cover integrates the supporting means and in that the components are fixed to the back cover.

The supporting means can be integrated by the shape and by the structure of the back cover. Such a back cover can be manufactured easily and inexpensively by plastic injection moulding.

A shaped and structured back cover is stiffer and more stabile than a flat back cover. As a result, the components can be fixed directly to the back cover. Separated supporting means are no longer required.

The number of elements of the TV set is reduced. This need less effort to manufacture and assemble the TV set. A thin and compact design is possible.

Advantageous developments of the invention are specified in the dependent claims.

A bottom of the back cover can have a structure with numerous levels and steps, which connect the levels. The supporting means for the components, which are generated by the levels and the steps, are integrated in the back cover. The components can be arranged on the different levels of the bottom and fixed by the steps. The levels can further comprise grooves and hollows for fixing the components. The steps as well as the grooves and hollows stabilise the back cover.

The back cover can also integrate supporting means for the flat screen. As a result, the flat screen can be fixed to the back cover. In order to integrate supporting means for the flat screen the back cover can comprise a collar, which generates the supporting means.

Further supporting means for the components and/or for the flat screen can be generated by screw bosses. The screw bosses can be provided with adapter elements, which also generate the supporting means. They stabilise the screw bosses and as a result, stabilise the back cover. In order to fix the components, the screw bosses can be arranged at or near a step in a line parallel to the step. They can be connected by adapter elements. As a result, the back cover can form all the supporting means, which are mentioned above.

The flat screen can comprise four corner elements, at which the flat screen is fixed to the collar of the back cover. Two of the four corner elements can comprise hinging sections. This enables the flat screen to be fixed to the back cover at the hinging sections of the two corner elements, and that the flat screen be put in an assembly position. The flat screen can be supported in the assembly position by an assembly stick.

The components can comprise an audio-video board, which has one or more of the following modules: an audio-video control board, an audio-video interface and a corresponding circuit. The components can further comprise one or more of the following modules: a power supply, speakers, a DVD player, a DVD module, a DVTB tuner, a HDM interface, a DV interface, a hard disk and further electronic devices.

A diagonal of the flat screen can have a minimum size of 10". It preferably has a minimum size of 12". The diagonal can have a size such as 32" or 37". It also can have a size of 60" ore more. In particular, TV sets of the invention with large flat screens have the advantage over TV sets of the

### prior art.

### Brief description of the drawings

The invention will be explained in more detail using one embodiment, which is illustrated in the figures.

It shows:
- figure 1 a TV set of the embodiment without a front cover in an assembly position;
- figure 2 a back cover of the TV;
- figure 3 a corner element with a hinging section in two positions; and
- figure 4 the assembled TV set with its stand before the stand is fixed.

### Detailed description of an embodiment of the invention

A TV set of an embodiment of the invention has a housing with a front cover 1 and a back cover 2, a flat screen, components and supporting means for fixing the components.

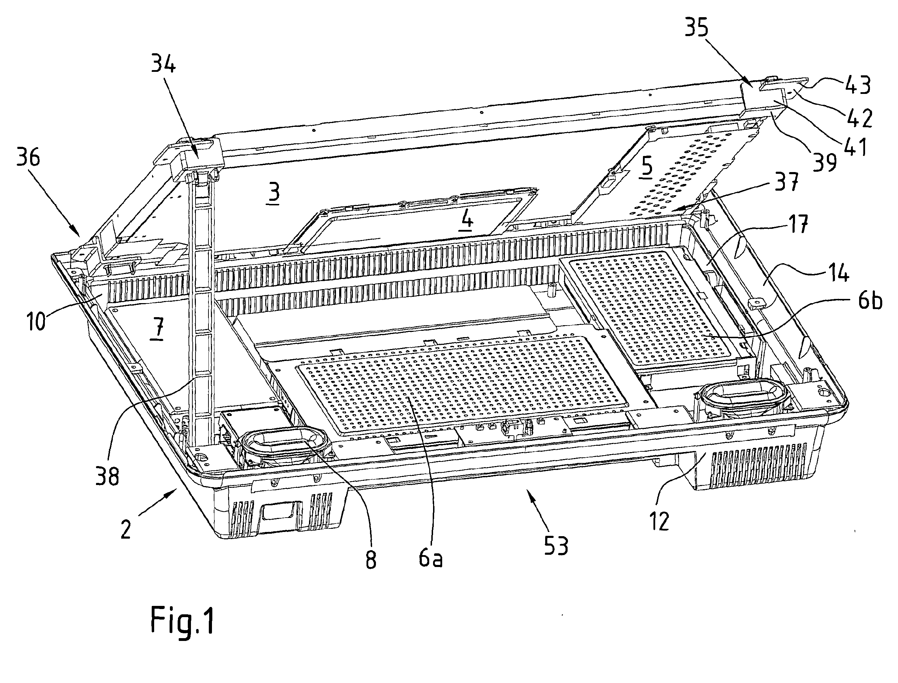

**Figure 1** shows the flat screen and some of the components in an assembly position. The flat screen is generated by a LCD panel 3 with control devices 4, 5 at its rear side. The TV set comprises feature and accessory components beside the LCD panel 3. As feature components, the TV set comprises an audio-video board, which is covered by a shielding 6a, a power supply 7, and speakers 8. The audio-video board comprises an audio-video control board. Alternatively or additionally, it can comprise an audio-video interface and/or a corresponding circuit. The power supply 7 comprises a main power supply and a standby power supply. The TV set comprises as accessory components other electronic devices, e.g. a DVD player. The electronic devices are covered by a shielding 6b. Alternatively, the TV set can comprise one or more of the following accessory components; a DVD module, a DVTB tuner, a HDM interface, a DV interface, a hard disk and further electronic devices.

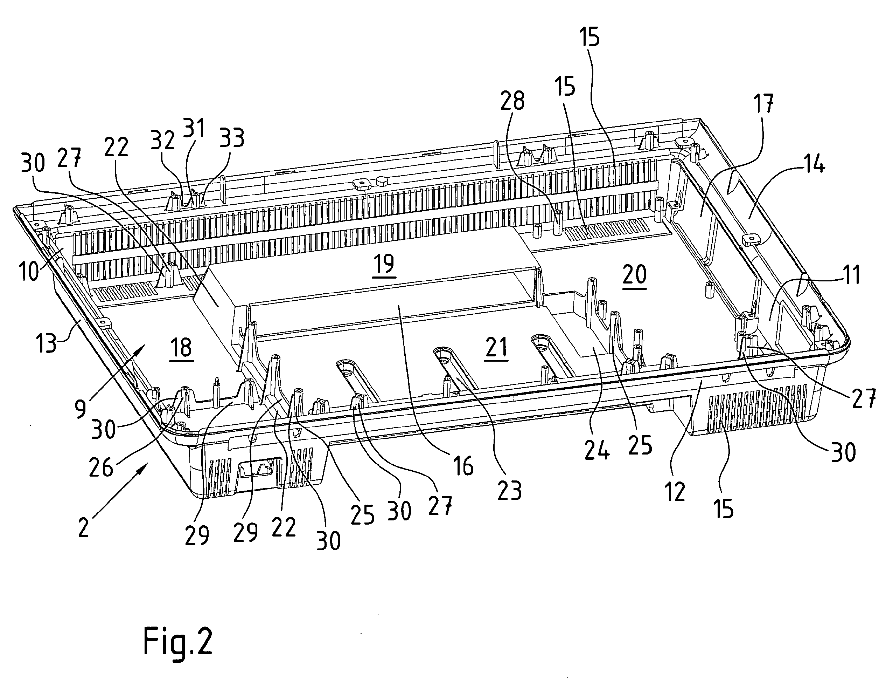

The back cover 2, which is shown in **figure 2**, is shaped in a way that the back cover 2 integrates supporting means for the fixing of the components. The cavity-shaped back cover 2 comprises a bottom 9, four walls 10, 11, 12 and 13 and a collar 14 at the upper end of the walls 10 to 13.

The bottom 9 and the rear and the front wall 10, 12 have air slots 15. There is an opening 16 in the bottom 9 and several openings 17 in the right side wall 11.

The bottom 9 is structured with numerous levels 18, 19, 20, 21, which are connected by steps 22. The steps 22 stabilise the bottom 9. One of the levels 19 generates a greater elevation in the middle of the bottom 9. The opening 16 is built between this level 19 and the lower level 21 at its front. The level 21 comprises three grooves 23 and a hollow 24, which also stabilise the bottom 9.

The bottom 9 integrates numerous screw bosses 25, 26, 27, 28. The screw bosses 25 are located near the step 22 between the levels 18 and 21 and at the step 22 between the levels 21 and 20. They are arranged in a line parallel to the steps 22. The screw bosses 26 are located on the level 18 and are arranged in a line parallel to the wall 12. This line divides the level 18 into a front section and a rear section.

The screw bosses 25 and 26 are connected by adapter elements 29, which are arranged between the screw bosses 25, 26. The adapter elements 29 are generated by thin plates. They are U- shaped with a high base and are connected to the screw bosses 25, 26 with the sides of the U. The adapter elements 29 and the fence-wise arranged screw bosses 25, 26 build fence-like limits along the lines. The limits fix the components.

Numerous screw bosses 25, 26, 27 comprise adapter elements 30, which are generated by thin rectangular tabs. The adapter elements 30 are connected to the screw bosses 25, 26, 27 at a right angle with its longer side and support the screw bosses 25, 26, 27. Some of the screw bosses 25, 26, 27 have two adapter elements 30, which are arranged at a 180° angle. While some have three others have four adapter elements 30, which are arranged at 90° angles. The adapter elements 29, 30 are integrated in the bottom 9.

The collar 14 also integrates screw bosses 31 and adapter elements 32, 33 for fixing the LCD panel 3 and the front cover 1. The collar 14 itself and its screw bosses 31 with the adapter elements 32, 33, which connect and support the screw bosses 31, stabilise the bottom 9.

The back cover 2 with its parts 9 to 33 is manufactured as one piece by a plastic injection moulding process.

The flat screen, e.g. the LCD panel 3, comprises four corner elements 34, 35, 36, 37 and an assembly stick 38. The corner elements 34 to 37 are fixed at the corners of the LCD panel 3. The two corner elements 34, 35 are arranged at the lower end of the LCD panel 3 and the two corner elements 36, 37 are arranged at the upper end.

The corner elements 34 to 37 have at least three walls 39, 40, 41, which are arranged rectangular to each other and which cover the corners of the LCD panel 3 at three sides. By projecting from these walls 39, 40, 41, fixing means for fixing the LCD panel 3 to the back cover 2 are provided.

The fixing means of the corner elements 34, 35 is generated by a rectangular section 42, which projects from the walls 40, 41 and which has two openings 43.

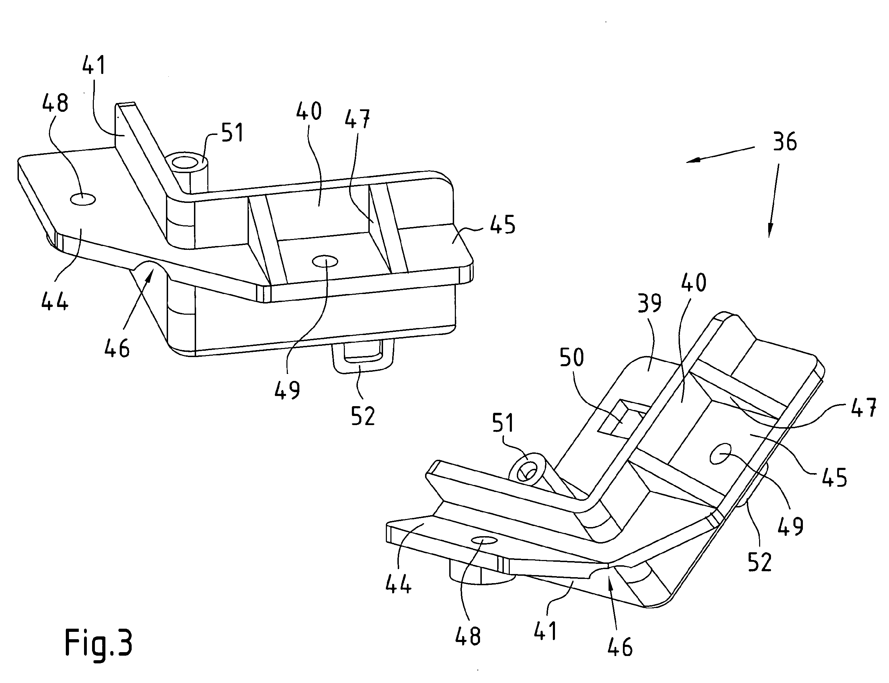

The fixing means of the corner elements 36, 37 are generated by a hinging section 44 and a fixing section 45. The hinging section 44 projects from the wall 41, which are arranged at the upper longitudinal edge of the LCD panel 3. A thin connection region 46 of the hinging section 44 near the wall 41, allows the hinging section 44 to be movable from a perpendicular position to a position parallel to the wall 41. The fixing section projects perpendicularly from the wall 40 and is stabilised by ribs 47. The hinging section 44 and the fixing section 45 have openings 48, 49 for fixing the LCD panel 3 on the back cover 2. To fix the corner elements 34 to 37 to the LCD panel 3, the corner elements 34 to 37 comprise fixing openings 50 and fixing bosses 51. The two left corner elements 34, 36 comprise fixing tabs 52 for the assembly stick 38. The corner element 36 is shown in **figure 3**.

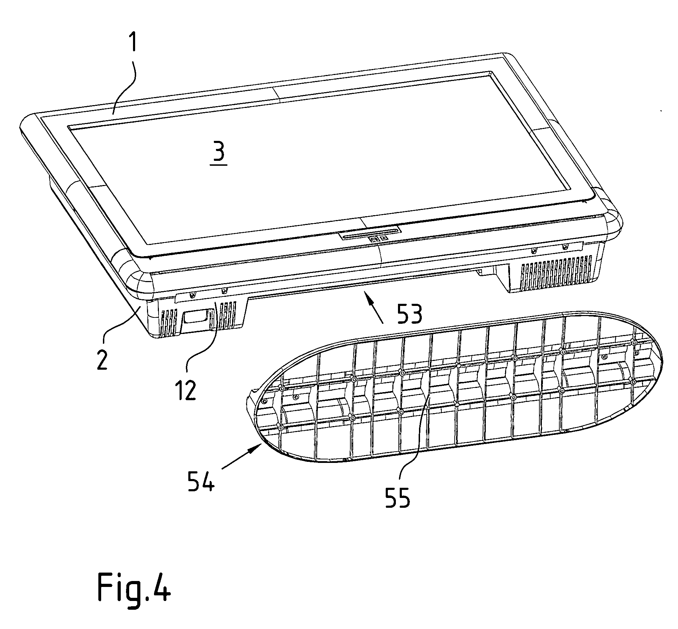

The front wall 12 and the bottom 9 generate a hollow 53, in which an upper part of a stand 54 of the TV set is arranged. A lower part of the stand 54 has an oval shape and comprises stabilisation rips 55. This is shown in **figure 4**.

The size of the diagonal of the flat screen, e.g. of the LCD panel 3, is 37". Alternatively, the size could be 60" or more. According to different embodiments of the invention, the diagonal size is preferably greater than 10" and and advantageously greater than 12".

In order to assemble the TV set, the components are arranged and fixed to the back cover 2. In particular, the main power supply and the standby power supply of the power supply 7 are arranged on the rear and on the front sections of the level 18. The audio-video board is arranged on the level 21 and the electronic devices are arranged on the level 20. The components are fixed by screws, which are not shown, to the screw bosses 25 to 28 and covered with the shielding 6a, 6b, if necessary. Only one step is needed to fix the components to the back cover 2.

The four corner elements 34 to 37 are fixed to the flat screen, e.g. to the LCD panel 3. The LCD panel 3 is fixed to the back cover 2 by the hinging sections 44 of the two corner elements 36, 37. Then the LCD panel 3 is placed in the assembly position, in which it is supported by the assembly stick 38. This is shown in figure 1. In this position, the LCD panel 3 is electrically connected to the components. Finally, the stick 38 is fitted to the corner elements 34 and 36 and the LCD panel 3 is fixed to screw bosses 31 of the collar 14 by screws, which are not shown, through the opening 43, 48, 49 of the corner elements 34 to 37. The front cover 1 and the stand 54 are added.

## Claims

1. A TV set comprising a housing with a front cover (1) and a back cover (2), a flat screen, components and supporting means for fixing the components, **characterised in that** the back cover (2) integrates the supporting means and **in that** the components are fixed to the back cover (2).

2. The TV set according to claim 1, **characterised in that** a bottom (9) of the back cover (2) has a structure with numerous levels (18 to 21) and steps (22), which connect the levels (18 to 21), and **in that** the supporting means for the components are generated by the levels (18 to 21) and the steps (22).

3. The TV set according to claim 1 or 2, **characterised in that** the back cover (2) integrates supporting means for the flat screen and **in that** the flat screen is fixed to the back cover (2).

4. The TV set according to claim 3, **characterised in that** the back cover (2) comprises a collar (14) and **in that** the supporting means for the flat screen are generated by the collar (14).

5. The TV set according to one of the claims 1 to 4, **characterised in that** back cover (2) forms screw bosses (25 to 28, 31) and **in that** the supporting means for the components and/or for the flat screen are generated by the screw bosses (25 to 28, 31).

6. The TV set according to claim 5, **characterised in that** the back cover (2) forms adapter elements (29, 30, 32, 33), which are connected with the screw bosses (2), and **in that** the supporting means for the components and/or for the flat screen are generated by the adapter elements (29, 30, 32, 33).

7. The TV set according to one of the claims 4 to 6, **characterised in that** the flat screen comprises four corner elements (34 to 37) and **in that** the flat screen is fixed to the collar (14) of the back cover (2) by the corner elements (34 to 37).

8. The TV set according to claim 7, **characterised in that** two of the four corner elements (36, 37) comprise hinging sections (44).

9. The TV set according to one of the claims 3 to 8, **characterised in that** the flat screen is comprised with an assembly stick (38) to support the flat screen during the assembly of the TV set.

10. The TV set according to one of the claims 1 to 9, **characterised in that** the components comprise an audio-video board.

11. The TV set according to claim 10, **characterised in that** the audio-video board comprises on ore more of the following modules: an audio-video control board, an audio-video interface and a corresponding circuit.

12. The TV set according to claim 10 or 11, **characterised in that** the components further comprise one or more of the following modules: a power supply (7), speakers (8), a DVD player, a DVD module, a DVTB tuner, a HDM interface, a DV interface, a hard disk and further electronic devices.

13. The TV set according to one of the claims 1 to 12, **characterised in that** the flat screen has a diagonal with a minimum size of 10".
